# EUROPÄISCHE PATENTSCHRIFT

(11) **EP 4 056 789 B1**
(45) Veröffentlichungstag und Bekanntmachung des Hinweises auf die Patenterteilung: **06.03.2024**
(21) Anmeldenummer: 22151569.5
(22) Anmeldetag: 14.01.2022
(51) Int. Cl.: E05B 1/00, B62H 5/00, B62J 43/13, B62M 6/90, E05B 47/06, E05B 77/54, H01M 50/262, H01M 50/249, E05B 47/00

(54) **VERFAHREN ZUM BETREIBEN EINES FAHRZEUGSCHLOSSES**
METHOD FOR OPERATING A VEHICLE LOCK
PROCÉDÉ DE FONCTIONNEMENT D'UNE SERRURE DE VÉHICULE

(30) Priorität: 09.03.2021 DE 102021105648
(43) Veröffentlichungstag der Anmeldung: 14.09.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 2 050 902
- WO-A1-2021/185779
- DE-A1-102018 111 296
- DE-U1-202019 005 536

## Beschreibung

Die Erfindung betrifft ein Verfahren zum Betreiben eines Fahrzeugschlosses mit einem Verriegelungsmechanismus.

Derartige Fahrzeugschlösser, insbesondere für Zweiräder, Fahrräder, Scooter oder Elektrofahrräder, sind grundsätzlich bekannt und können beispielsweise ein Batteriefachschloss, ein Rahmenschloss, ein Bremsscheibenschloss, ein Sitzfachschloss, ein Schloss für eine Transportbox, d.h. ein Kofferschloss, ein Bügelschloss, ein Faltschloss oder ähnliche Schlösser umfassen. Besonders komfortabel sind elektrisch betätigbare Schlösser, welche beispielsweise eine schlüssellose Entriegelung ermöglichen. Soll zur Gewährleistung einer hohen Sicherheit gegen unbefugtes oder unbeabsichtigtes Öffnen des Schlosses ein kraftvoller Verriegelungsmechanismus zum Einsatz kommen, so wird ein starker und somit großer, schwerer und teurer elektrischer Aktor mit einem hohen Energiebedarf für dessen Betätigung benötigt.

Aus der DE 20 2019 005 536 U1 ist eine Haltevorrichtung mit einem elektrisch betätigbaren Verriegelungselement zur Sicherung eines für den Elektroantrieb eines E-Bikes benötigten Akkumulators bekannt. Die EP 2 050 902 A1 beschreibt ein mechatronisches Schloss, insbesondere ein Möbelschloss mit einem linear beweglichen Riegel, der zum Verriegeln des Schlosses aus einer zurückgezogenen Position in eine vorgeschobene Position bewegbar ist. Die nicht vorveröffentlichte internationale Anmeldung WO 2021/185779 A1 offenbart ein Schloss mit einem Verriegelungsmechanismus, welcher einen Riegel aufweist, der zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist.

Es ist eine Aufgabe der Erfindung, ein Verfahren zum Betreiben eines Fahrzeugschlosses bereitzustellen, das eine komfortable Bedienung bei gleichzeitig erhöhter Sicherheit und erhöhter Wirtschaftlichkeit gewährleistet.

Die Aufgabe wird gelöst durch ein Verfahren mit den Merkmalen des Anspruchs 1 und insbesondere dadurch, dass ein Öffnen des Schlosses die folgenden Schritte umfasst: Überführen eines Sperrelements einer Sperreinrichtung mittels eines Aktors von einer Sperrstellung in eine Freigabestellung, wobei das Sperrelement in der Sperrstellung die Betätigung des Verriegelungsmechanismus blockiert und in der Freigabestellung die Betätigung des Verriegelungsmechanismus freigibt; manuelle Betätigung eines an dem Schloss angeordneten Betätigungselements und Überführen des Betätigungselements von einem Passivzustand in einen Aktivzustand, wobei durch das Überführen des Betätigungselements von dem Passivzustand in den Aktivzustand ein Riegel des Verriegelungsmechanismus von einer Verriegelungsposition in eine Entriegelungsposition überführt wird, wobei der Riegel in der Verriegelungsposition ein Entfernen eines Gegenstücks aus dem Schloss verhindert, und in der Entriegelungsposition ein Entfernen eines Gegenstücks aus dem Schloss erlaubt. Nach Abschluss der Betätigung des Betätigungselements wird dieses von dem Aktivzustand in den Passivzustand und der Riegel von der Entriegelungsposition in die Verriegelungsposition überführt, wohingegen das Sperrelement in der Freigabestellung verweilt, wobei ein Schließen des Schlosses die folgenden Schritte umfasst:

Einbringen eines Gegenstücks in den Verriegelungsmechanismus, wobei das Betätigungselement während des Einbringens des Gegenstücks vorübergehend in seinen Aktivzustand überführt wird,

Überführen des Riegels in die Verriegelungsposition, wobei in der Verriegelungsposition der Riegel und das Gegenstück miteinander derart in Eingriff stehen, dass ein Entfernen des Gegenstücks aus dem Verriegelungsmechanismus verhindert wird,

Überführen des Sperrelements von der Freigabestellung in die Sperrstellung.

Erfindungsgemäß ist also ein zweistufiges Verfahren zum Betreiben des Schlosses vorgesehen, bei dem einerseits mittels des Verriegelungsmechanismus unmittelbar der gewünschte Ver- bzw. Entriegelungszustand des Schlosses hergestellt wird und andererseits eine Sperreinrichtung die Betätigung des Verriegelungsmechanismus kontrolliert. In einem verriegelten und gesperrten Zustand des Schlosses, in dem sich der Verriegelungsmechanismus in der Verriegelungsposition und die Sperreinrichtung in der Sperrstellung befinden, wird ein unbeabsichtigtes oder unbefugtes Entriegeln des Verriegelungsmechanismus, beispielsweise durch Erschütterungen bei Fahrt über unebenes Gelände oder durch Manipulation des Schlosses, somit besonders wirksam verhindert.

Es versteht sich, dass das durch das erfindungsgemäße Verfahren betreibbare Schloss zumindest folgende Komponenten aufweist: den Verriegelungsmechanismus umfassend den Riegel und das Betätigungselement sowie die Sperreinrichtung mit dem Sperrelement und dem dazugehörigen Aktor.

Bei dem Schloss kann es sich beispielsweise um ein Batteriefachschloss, ein Rahmenschloss, ein Bremsscheibenschloss, ein Sitzfachschloss, ein Schloss für eine Transportbox, d.h. ein Kofferschloss, ein Bügelschloss, ein Faltschloss oder ein ähnliches Schloss handeln, insbesondere eines Motorrads, Motorrollers, Scooters, Fahrrads, insbesondere Elektrofahrrads.

Der Verriegelungsmechanismus umfasst einen Riegel, welcher riegel- oder bolzenartig oder auch als Bügel, Klinke, Kugel, oder Walze ausgebildet sein kann. In seiner Verriegelungsposition verriegelt der Riegel das Schloss, insbesondere dadurch, dass er mit einem Gegenstück derart in Eingriff steht, dass das Gegenstück nicht aus dem Schloss entfernt werden kann. Beispielsweise kann das Gegenstück eine Aussparung aufweisen, in die der Riegel eingreift, oder umgekehrt. Der Riegel kann alternativ oder zusätzlich eine an dem Gegenstück angebrachte Struktur hintergreifen, oder umgekehrt. Bei dem Gegenstück kann es sich entweder um einen Bestandteil des Schlosses selbst handeln, beispielsweise um einen Schließbügel oder Kloben, oder auch um ein nicht zu dem Schloss gehöriges Objekt bzw. einen Abschnitt davon, wie beispielsweise um einen in dem bzw. mittels des Schlosses zu sichernden Gegenstand, wie z.B. eine in dem Schloss zu sichernde Batterie oder einen Abschnitt davon. Zum Entriegeln des Schlosses wird der Riegel in eine Entriegelungsposition überführt, insbesondere also der Riegel und das Gegenstück außer Eingriff gebracht. Die Überführung des Riegels zwischen der Ver- und der Entriegelungsposition kann eine rotatorische und/oder eine translatorische Bewegung des Riegels umfassen.

Je nach Ausgestaltung des Schlosses kann das Öffnen unterschiedliche Schritte umfassen. Bei einem Batteriefachschloss kann das Öffnen des Schlosses eine Entriegelung des Batterieschlosses und eine Batterieentnahme umfassen. Bei einem Rahmen-, Koffer- oder Bremsscheibenschloss kann eine Entriegelung und ein Lösen eines Schließbügels oder eines anderen Gegenstücks aus dem Verriegelungsmechanismus vorgesehen sein.

Der Verriegelungsmechanismus wird mittels eines Betätigungselements durch einen Nutzer betätigt. Die Betätigung erfolgt manuell und ohne Einsatz eines Schlüssels. Je nach Ausgestaltung des Schlosses wirken zum Halten des Riegels in der Verriegelungsposition nicht unerhebliche Kräfte, insbesondere derart, dass eine sichere Verriegelung des Schlosses und folglich Sicherung z.B. eines Schließbügels oder einer Batterie gewährleistet ist. Eine manuelle Betätigung des Betätigungselements erlaubt das Überwinden dieser Kräfte, um den Riegel beim Öffnen in die Entriegelungsposition zu bewegen. Hierdurch kann in besonders komfortabler Weise auf einen Schlüssel oder ein anderes Bedienungsmittel für die Entriegelung des Verriegelungsmechanismus verzichtet werden.

Das Betätigungselement kann eine Handhabe wie einen Drehgriff, einen Schieber, einen Druckknopf, einen Hebel, oder eine Zugöse aufweisen. Die Betätigung kann eine translatorische und/oder rotatorische Bewegung des Betätigungselements durch den Nutzer umfassen, d.h. das Betätigungselement kann je nach Ausgestaltung durch einen Nutzer verdreht, verschoben, gedrückt, verschwenkt oder gezogen werden.

Durch die Betätigung wird das Betätigungselement zwischen einem Passivzustand und einem Aktivzustand überführt. Dabei ist das Betätigungselement derart mit dem Riegel gekoppelt, dass durch die Überführung des Betätigungselements von dem Passivzustand in den Aktivzustand ein Verstellen des Riegels in die Entriegelungsposition erfolgt. Die Bewegung des Betätigungselements kann unmittelbar oder mittels eines Übertragungsabschnitts auf den Verriegelungsmechanismus, insbesondere auf den Riegel, übertragen werden. Der Übertragungsabschnitt kann beispielsweise ein Getriebe umfassen, durch welches die Bewegung des Betätigungselements in eine Bewegung des Riegels mit abweichendem Betrag und/oder abweichender Richtung umgewandelt werden kann. Die Kopplung zwischen Riegel und Betätigungselement ist derart bidirektional ausgestaltet, dass eine Bewegung des Riegels von der Verriegelungsposition in die Entriegelungsposition eine Überführung des Betätigungselements von dem Passivzustand in den Aktivzustand bewirkt. Umgekehrt ist es in einem nicht zur Erfindung gehörenden Ausführungsbeispiel auch möglich, dass eine Bewegung des Riegels von der Verriegelungsposition in die Entriegelungsposition den Zustand des Betätigungselements nicht verändert, beispielsweise durch eine an dem Betätigungselement oder in dem Übertragungsabschnitt vorgesehene Freihub- oder Freilauffunktion.

Die Sperreinrichtung umfasst ein Sperrelement und einen Aktor zum Verstellen des Sperrelements von der Sperrstellung in die Freigabestellung und umgekehrt. Bei dem Aktor kann es sich um einen elektrischen Aktor wie beispielsweise einen elektromechanischen oder einen elektromagnetischen Aktor handeln. Da auf das Sperrelement selbst keine großen Kräfte wirken, insbesondere da das Sperrelement keine Haltefunktion in dem Schloss übernimmt, beispielsweise für einen Schließbügel oder eine Batterie, reicht zur Verstellung des Sperrelements typischerweise ein elektrischer Aktor von geringer Leistung und daher mit geringem Gewicht, Raumbedarf und Kosten aus.

Die Energieversorgung der Sperreinrichtung, insbesondere des Aktors, kann durch eine an dem Schloss bzw. an der Sperreinrichtung selbst angebrachte Batterie erfolgen. Alternativ oder zusätzlich kann die Energieversorgung der Sperreinrichtung durch eine außerhalb des Schlosses angeordnete Energiequelle erfolgen. Beispielsweise kann eine zentrale Energieversorgung des Fahrzeugs wie etwa eine Fahrzeugbatterie die Sperreinrichtung mit Energie versorgen. Dies kann im Falle eines Batterieschlosses beispielsweise die in dem Batterieschloss zu sichernde Batterie sein.

Das Sperrelement kann stift- oder bolzenartig, aber auch kugel-, walzen- oder keilförmig ausgebildet sein. In seiner Sperrstellung kann das Sperrelement mit dem Verriegelungsmechanismus und/oder mit dem Betätigungselement derart in Eingriff stehen, dass eine Verstellung des Riegels in die Entriegelungsposition und/oder eine Betätigung des Betätigungselements blockiert ist. Das Sperrelement kann dabei mit dem Riegel, einer Handhabe und/oder einem Übertragungsabschnitt in Eingriff stehen. Beispielsweise kann das Sperrelement in der Sperrstellung in eine Aussparung des Verriegelungsmechanismus und oder des Betätigungselements eingreifen und bei seiner Verstellung in die Freigabestellung aus dieser gelöst werden. Die Verstellung des Sperrelements zwischen der Sperrstellung und der Freigabestellung kann eine translatorische und/oder eine rotatorische Bewegung des Sperrelements umfassen.

Nach dem Entsperren und Entriegeln des Schlosses kann das Sperrelement in seiner Freigabestellung verweilen. Hierdurch befindet sich das Schloss in einer Art Bereitschaftszustand, in welchem ein erneutes Schließen des Schlosses möglich ist, ohne dass zuvor eine Nutzerhandlung zur Verstellung des Sperrelements in die Freigabestellung nötig ist. Dies ist insbesondere dann vorteilhaft, wenn nach dem Überführen des Riegels von der Verriegelungsposition in die Entriegelungsposition ein Gegenstück aus dem Schloss entfernt wurde. Dieses oder ein anderes Gegenstück kann anschließend wieder in das Schloss und insbesondere in den Verriegelungsmechanismus eingebracht werden, ohne dass zuvor das Sperrelement in die Freigabestellung bewegt werden muss.

Vorteilhafte Ausgestaltungen der Erfindung sind den Unteransprüchen, der Beschreibung und der Zeichnung zu entnehmen.

Gemäß einer Ausführungsform wird das Überführen des Betätigungselements von dem Aktivzustand in den Passivzustand und/oder das Überführen des Riegels von der Entriegelungsposition in die Verriegelungsposition durch ein Rückstellelement selbsttätig bewirkt. Indem sich das Betätigungselement nach dem Abschluss einer Betätigung durch den Nutzer selbsttätig wieder in seinen Passivzustand, d.h. gewissermaßen also in seinen Ausgangszustand, Zustand zurückstellt, kann eine praktische Einhandbedienung realisiert werden. Das Rückstellelement kann beispielsweise durch das Überführen des Betätigungselements in den Aktivzustand und/oder durch das Überführen des Riegels in die Entriegelungsposition aufgeladen oder vorgespannt werden, d.h. die Überführung in den Aktivzustand bzw. in die Entriegelungsposition erfolgt entgegen einer Rückstellkraft des Rückstellelements. Bei dem Rückstellelement kann es sich beispielsweise um eine Rückstellfeder handeln. Das Betätigungselement und der Riegel können durch dasselbe Rückstellelement selbsttätig in den Passivzustand bzw. in den Verriegelungszustand überführt werden. Dies ermöglicht bei einer bidirektionalen Kopplung von Riegel und Betätigungselement eine Einsparung von Bauteilen und Bauraum. Alternativ können der Riegel und das Betätigungselement jeweils durch ein eigenes Rückstellelement selbsttätig in den Verriegelungszustand bzw. den Passivzustand überführt werden.

Gemäß einer weiteren Ausführungsform erfolgt das Überführen des Sperrelements von der Sperrstellung in die Freigabestellung dann, wenn die Sperreinrichtung einen Freigabebefehl empfängt, der durch ein außerhalb des Schlosses angeordnetes Steuergerät an die Sperreinrichtung übermittelt wird. Ein solcher Freigabebefehl kann insbesondere durch eine Nutzereingabe an dem Steuergerät erzeugt werden. Bei dem Freigabebefehl kann es sich um ein elektrisches Signal handeln. Die Verarbeitung von Steuerbefehlen, wie beispielsweise einem Freigabebefehl, in der Sperreinrichtung kann durch eine Steuereinrichtung der Sperreinrichtung erfolgen. In Abhängigkeit von dem empfangenen Steuerbefehl kann die Sperreinrichtung den Aktor aktivieren und deaktivieren, um das Sperrelement zwischen der Sperrstellung und der Freigabestellung zu verstellen. Wenn die Sperreinrichtung einen von dem Steuergerät ausgesandten Freigabebefehl empfängt, kann sie eine Verstellung des Sperrelements durch den Aktor in Gang setzen, ohne dass eine weitere Nutzerhandlung erforderlich ist.

Bei dem Steuergerät kann es sich beispielsweise um ein Smartphone, eine Smartwatch oder einen anderen, insbesondere tragbaren, Computer handeln. Es kann sich bei dem Steuergerät aber auch um einen Bordcomputer des Fahrzeugs handeln. Es kann eine Softwareanwendung mit einer grafischen Benutzeroberfläche auf dem Steuergerät vorhanden sein, mittels der der Nutzer das Schloss ansteuern kann.

Der Freigabebefehl kann von dem Steuergerät an die Sperreinrichtung drahtlos oder drahtgebunden übermittelt werden, insbesondere auch verschlüsselt. Eine Verbindung zwischen dem Steuergerät und der Sperreinrichtung kann beispielsweise mittels drahtloser Kommunikationstechnologien für den Nahbereich (wie z.B. Bluetooth, WLAN, RFID) oder Mobilfunknetze (wie z.B. WIFI, GSM, GPRS, 3G, 4G, 5G), oder Fernnetze auch "long-range networks" genannt, hergestellt werden. Das Schloss und das Steuergerät können derart konfiguriert sein, dass die Sperreinrichtung einen Freigabebefehl bereits dann von dem Steuergerät empfängt, wenn sich dieses dem Schloss bis auf eine zuvor definierte Entfernung nähert oder in einen Empfangsbereich des Schlosses gelangt. Die Entfernung kann durch einen Nutzer konfigurierbar sein.

Das Steuergerät kann sich gegenüber der Sperreinrichtung authentifizieren. Dies kann beispielsweise durch den Austausch elektronischer Schlüssel erfolgen. Die Sperreinrichtung kann derart konfiguriert sein, dass sie bei erfolgreicher Authentifizierung eines Steuergeräts von diesem Steuergerät Steuerbefehle entgegennimmt, verarbeitet und/oder ausführt. Alternativ oder zusätzlich kann es erforderlich sein, dass der Nutzer seine Berechtigung zur Erstellung eines Steuerbefehls durch Eingabe eines Schließgeheimnisses, insbesondere an dem Steuergerät, oder durch eine Nutzerauthentifizierung an dem Steuergerät, beispielsweise mittels biometrischer Merkmale oder eines Authentifizierungscodes, nachweist. Das Steuergerät kann zur Steuerung mehrerer Sperreinrichtungen ausgebildet sein, wobei insbesondere eine einmalige Nutzerauthentifizierung ausreichend sein kann, um nach einer erfolgreichen Authentifizierung des Nutzers an dem Steuergerät die Bedienung eines oder mehrerer Schlösser über das Steuergerät zu ermöglichen.

Gemäß einer Ausführungsform wird das Überführen des Sperrelements von der Sperrstellung in die Freigabestellung während der Fahrt des Fahrzeugs verhindert. Handelt es sich bei dem Schloss beispielsweise um eine Batteriefachschloss, so kann auf diese Weise die Unterbrechung der Energieversorgung einerseits sowie der Verlust der Batterie während der Fahrt durch unbeabsichtigtes Öffnen des Schlosses andererseits verhindert werden. Ebenso kann beispielsweise bei einem Kofferschloss ein unerwünschtes Öffnen der Transportbox während der Fahrt und bei einem Bügelschloss der Verlust des Bügels und/oder des Schlosskörpers verhindert werden.

Der Bewegungszustand des Fahrzeugs kann mittels eines Sensors ermittelt werden. Alternativ oder zusätzlich können Daten über den Bewegungszustand aus dem Zustand eines Antriebsmotor des Fahrzeugs abgeleitet werden, welche insbesondere durch eine Steuerung des Antriebsmotors bereitgestellt werden können. Die Sperreinrichtung selbst und insbesondere eine Steuereinrichtung der Sperreinrichtung kann die Sensordaten über den Bewegungszustand abfragen und/oder empfangen und den Aktor auch bei gegebenenfalls vorliegendem Freigabebefehl lediglich dann zur Verstellung des Sperrelements in die Freigabestellung aktivieren, wenn der Stillstand des Fahrzeugs gewährleistet ist.

Gemäß einer weiteren Ausführungsform wird ein Bewegungszustand des Fahrzeugs mittels eines Steuergeräts ermittelt, insbesondere eines außerhalb des Schlosses angeordneten Steuergeräts wie beispielsweise einem Bordcomputer oder einem Smartphone. Das Steuergerät kann beispielsweise Bewegungsdaten von entsprechenden Sensoren oder einem Antriebsmotor des Fahrzeugs abfragen. Das Steuergerät kann beispielsweise lediglich dann einen Freigabebefehl aussenden, wenn zuvor der Stillstand des Fahrzeugs ermittelt wurde.

Handelt es sich bei dem Schloss beispielsweise um ein Rahmen- oder Bremsscheibenschloss kann auch vorgesehen sein, dass das Überführen des Sperrelements von der Freigabestellung in die Sperrstellung während der Fahrt des Fahrzeugs verhindert wird.

Generell kann das Überführen des Sperrelements von der Sperrstellung in die Freigabestellung oder umgekehrt während der Fahrt des Fahrzeugs verhindert werden. Dies erhöht grundsätzlich die Sicherheit für den Nutzer, da dieser nicht während der Fahrt durch Betätigung eines Schlosses abgelenkt wird und zudem unvorhergesehene und unbeabsichtigte Veränderungen an dem Schloss während der Fahrt vermieden werden.

Gemäß der Erfindung umfasst ein Schließen des Schlosses die folgenden Schritte:
Einbringen eines Gegenstücks in den Verriegelungsmechanismus; Überführen des Riegels in die Verriegelungsposition, wobei in der Verriegelungsposition der Riegel und das Gegenstück miteinander derart in Eingriff stehen, dass ein Entfernen des Gegenstücks aus dem Verriegelungsmechanismus verhindert wird; Überführen des Sperrelements von der Freigabestellung in die Sperrstellung.

Der Riegel kann während des Einbringens des Gegenstücks vorübergehend in seine Entriegelungsposition überführt werden, insbesondere entgegen der Rückstellkraft eines Rückstellelements. Insbesondere kann das Gegenstück beim Einbringen in das Schloss derart auf den Riegel drücken, dass dieser in die Entriegelungsposition überführt wird, insbesondere wobei durch die Bewegung des Riegels in die Entriegelungsposition das Rückstellelement vorgespannt oder aufgeladen wird. Ist das Gegenstück vollständig in das Schloss eingebracht, d.h. befindet sich das Gegenstück in der Position, in der es in der Verriegelungsposition durch den Riegel gesichert wird, so gewinnt der Riegel Raum sich zu bewegen und kann durch das, insbesondere vorgespannte, Rückstellelement in seine Verriegelungsposition zurückbewegt werden. Auf diese Weise kann eine Fallenfunktion des Schlosses realisiert werden, durch die der Riegel nach dem Einbringen des Gegenstücks selbsttätig in die Verriegelungsposition überführt wird.

Erfindungsgemäß wird das Betätigungselement während des Einbringens des Gegenstücks vorübergehend in seinen Aktivzustand mittels einer bidirektionalen Kopplung zwischen dem Riegel und dem Betätigungselement überführt werden.

Gemäß einer Ausführungsform wird vor dem Überführen des Sperrelements in die Sperrstellung eine Position des Riegels, des Betätigungselements, des Gegenstücks und/oder des Sperrelements mittels einer geeigneten Sensoreinrichtung abgefragt. Die Positionsinformation kann durch eine oder mehrere geeignete Sensoren ermittelt werden, welche die Position eines oder mehrerer Bestandteile des Schlosses und/oder eines zu sichernden Gegenstands, z.B. einer Fahrradbatterie, abfragen. Beispielsweise können Anschlagsensoren oder durch das Gegenstück, den Riegel und/oder das Betätigungselement betätigbare Schalter vorgesehen sein, welche bei Erreichen einer bestimmten Position des ihnen zugeordneten Elements betätigt werden.

Die Sensorinformation kann entweder direkt durch die Steuereinrichtung der Sperreinrichtung abgefragt, empfangen und/oder verarbeitet werden oder durch ein außerhalb des Schlosses angeordnetes Steuergerät. Das Steuergerät und die Steuereinrichtung der Sperreinrichtung können für eine, insbesondere drahtlose, Kommunikation, insbesondere in zwei Richtungen, ausgebildet sein. So können Ergebnisse der Sensorabfrage oder andere Informationen zwischen dem Steuergerät und der Sperreinrichtung ausgetauscht werden.

Sollten beispielsweise die durch einen Sensor ermittelten Positionen einer oder mehrerer der sensorisch erfassten Komponenten sich nicht in einem vorgesehenen Zustand oder einer vorgesehenen Position befinden, kann die Ausgabe einer Fehlermeldung oder einer Warnung vorgesehen sein. Beispielsweise kann durch das Steuergerät eine Fehlermeldung auf einem Display, wobei konkret das betreffende Element benannt werden kann, oder ein akustischer Alarm ausgegeben werden. Alternativ oder zusätzlich kann die Sperreinrichtung selbst einen Warnhinweis, insbesondere einen Warnton, aussenden.

Gemäß einer Ausführungsform erfolgt das Überführen des Sperrelements in die Sperrstellung nur dann, wenn eine vorbestimmte Zeitspanne seit dem Einbringen des Gegenstücks, dem Überführen des Riegels in die Verriegelungsposition und/oder dem Überführen des Betätigungselements in den Passivzustand verstrichen ist. Das Überführen des Sperrelements in die Sperrstellung kann nach Ablauf der Zeitspanne selbsttätig ohne Nutzerhandlung erfolgen. Zur Abfrage der verstrichenen Zeitspanne können Sensoren zur Positionsbestimmung mit einer Zeiterfassung kombiniert werden, wobei die Positions- und Zeit-Informationen durch die Sperreinrichtung selbst oder durch das Steuergerät abgefragt, empfangen und/oder verarbeitet werden können. Die Zeitspanne kann so groß gewählt werden, dass der Nutzer ausreichend Zeit hat, um nach dem Einsetzen des Gegenstücks den korrekten Sitz des Gegenstücks zu überprüfen. Ferner kann die Zeitspanne kann so klein gewählt werden, dass das Fahrzeug nicht bereits Fahrt aufgenommen hat, bevor das Sperrelement schließt. Beispielsweise kann die Zeitspanne im Bereich weniger Sekunden liegen.

Gemäß einer weiteren Ausführungsform erfolgt das Überführen des Sperrelements in die Sperrstellung nur dann, wenn eine Auswertung der Sensorabfrage ergibt, dass das Gegenstück eingebracht ist, der Riegel sich in der Verriegelungsposition befindet und/oder das Betätigungselement sich in dem Passivzustand befindet. Ein Verklemmen des Schlosses während des Schließens oder durch Kollisionen verursachte Beschädigungen an den mechanischen Komponenten des Schlosses können auf diese Weise wirksam verhindert werden.

Alternativ oder zusätzlich erfolgt das Überführen des Sperrelements in die Sperrstellung nur dann, wenn das Sperrelement einen Sperrbefehl empfängt, der durch ein außerhalb des Schlosses angeordnetes Steuergerät an das Sperrelement übermittelt wird. Ein solcher Sperrbefehl kann durch eine Nutzereingabe an dem Steuergerät erzeugt werden. Alternativ kann das Steuergerät, insbesondere basierend auf Resultaten der vorstehend beschriebenen Sensorabfragen und/oder abgelaufenen Zeitspannen, die Aussendung eines Sperrbefehls selbsttätig vornehmen. Wird durch den Nutzer ein Sperrbefehl eingegeben, kann das Steuergerät die Übersendung desselben an die Sperreinrichtung so lange verzögern, bis alle Sensorabfragen bestätigen, dass sich die sensorisch erfassten Komponenten in dem jeweils vorgesehenen Zustand bzw. in der jeweils vorgesehenen Position befinden und/oder dass alle vorbestimmten Zeitspannen abgelaufen sind.

Gemäß einer weiteren Ausführungsform erfolgt das Überführen des Sperrelements in die Sperrstellung nur dann, wenn durch das eingebrachte Gegenstück ein Kontakt zu einer Spannungsversorgung für den Aktor des Sperrelements hergestellt wird. Handelt es sich bei dem Schloss um ein Batterieschloss und bei dem Gegenstück um eine Batterie, so kann die Batterie als Energieversorgung des Aktors vorgesehen sein. Durch das Einsetzen der Batterie in das Schloss kann zugleich ein elektrischer Kontakt zwischen der Batterie und dem Aktor hergestellt werden, sodass die Betätigung Aktors ermöglicht wird. Auch beispielsweise ein Rahmen-, Bremsscheiben-, oder Kofferschloss kann eine Batterie des Fahrzeugs als Energieversorgung für die Sperreinrichtung nutzen. Beispielsweise kann durch das Einsetzen des Gegenstücks ein in dem Schloss angeordneter Schalter betätigt werden oder ein elektrischer Kontakt durch das Gegenstück hergestellt werden, der die Stromversorgung des Aktors herstellt. Der Aktor kann selbsttätig das Sperrelement in die Sperrstellung verstellen, sobald er mit Energie versorgt ist. Eine Verstellung des Sperrelements in die Sperrstellung durch den Aktor kann gemäß dieser Ausführungsform nur in Anwesenheit des Gegenstücks erfolgen. Somit ist sichergestellt, dass das Sperrelement in Abwesenheit des Gegenstücks stets in der Freigabestellung bleibt, sodass das Einsetzen des Gegenstücks komfortabel ohne zusätzlich erforderliches Verstellen des Sperrelements in die Freigabestellung möglich ist.

Das Schloss kann in einen gesperrten Schlafzustand versetzt werden, wenn es einen Schlafbefehl von einem außerhalb des Schlosses angeordneten Steuergerät empfängt, beispielsweise wenn das Steuergerät von dem Fahrzeug entfernt wird oder wenn eine vorbestimmte Zeitspanne verstrichen ist, seit das Schloss geschlossen wurde. In dem gesperrten Schlafzustand können sich das Sperrelement in der Sperrstellung, das Betätigungselement in dem Passivzustand und der Riegel in dem Verriegelungszustand befinden. Ferner kann es erforderlich sein, dass ein Gegenstück in den Verriegelungsmechanismus eingesetzt ist, um das Schloss in den gesperrten Schlafzustand versetzen zu können. In dem gesperrten Schlafzustand weist das geschlossene Schloss, d.h. das verriegelte und gesperrte Schloss mit eingesetztem Gegenstück, eine hohe Sicherheit gegen unbefugten Zugriff auf, beispielsweise wenn das Fahrzeug für gewisse Zeit abgestellt wird.

Das Schloss kann zudem in einen entsperrten Schlafzustand versetzt werden, wenn es einen Schlafbefehl von einem außerhalb des Schlosses angeordneten Steuergerät empfängt, beispielsweise wenn das Steuergerät von dem Fahrzeug entfernt wird oder wenn eine vorbestimmte Zeitspanne verstrichen ist, seit ein Gegenstück aus dem Schloss entfernt wurde. In dem entsperrten Schlafzustand befinden sich das Sperrelement in der Freigabestellung, das Betätigungselement in dem Passivzustand und der Riegel in dem Verriegelungszustand. Ein Gegenstück darf nicht in den Verriegelungsmechanismus eingesetzt sein, um das Schloss in den entsperrten Schlafzustand versetzen zu können, d.h. in dem entsperrten Schlafzustand befindet sich das Schloss in dem Bereitschaftszustand.

In dem gesperrten und/oder in dem entsperrten Schlafzustand kann das Steuergerät von dem Schloss entkoppelt oder grundsätzlich ausgeschaltet und somit nicht mit dem Schloss verbunden sein. Das Versetzen in einen Schlafzustand kann beispielsweise durch Abnehmen eines Bordcomputers von dem Fahrzeug erfolgen. Es kann erforderlich sein, dass das Fahrzeug sich im Stillstand befindet, um das Schloss in einen Schlafzustand versetzen zu können.

Im Gegensatz zu dem Schlafzustand kann das Schloss während der Fahrt, d.h. während einer Bewegung des Fahrzeugs, einen gesperrten Fahrzustand einnehmen, in dem sich ebenfalls das Sperrelement in der Sperrstellung, das Betätigungselement in dem Passivzustand und der Riegel in dem Verriegelungszustand befinden können. Voraussetzung hierfür kann sein, dass das Steuergerät mit dem Schloss verbunden und aktiv ist. Ferner kann zur Herstellung des gesperrten Fahrzustands die Anwesenheit eines Gegenstücks in dem Schloss erforderlich sein. In Abwesenheit eines Gegenstücks kann ein entsperrter Fahrzustand mit in der Freigabestellung befindlichem Sperrelement, in dem Passivzustand befindlichen Betätigungselement und in dem Verriegelungszustand befindlichem Riegel definiert sein.

Die Erfindung wird nachfolgend lediglich beispielhaft unter Bezugnahme auf mögliche Ausführungsformen anhand der Zeichnung erläutert. Es zeigen:
- Fig. 1A: ein beispielhaftes Schloss mit einem Verriegelungsmechanismus und einer Sperreinrichtung in einem verriegelten und gesperrten Zustand;
- Fig. 1B: das Schloss von Fig. 1A in einem entriegelten und entsperrten Zustand;
- Fig. 2: ein Ablaufdiagramm betreffend das Öffnen des Schlosses von Fig. 1;
- Fig. 3: ein Ablaufdiagramm betreffend das Entnehmen eines Energiespeichers aus dem Schloss von Fig. 1;
- Fig. 4: ein Ablaufdiagramm betreffend das Schließen des Schlosses von Fig. 1;
- Fig. 5: ein Ablaufdiagramm betreffend das Versetzen des Schlosses von Fig. 1 in einen Schlafzustand.

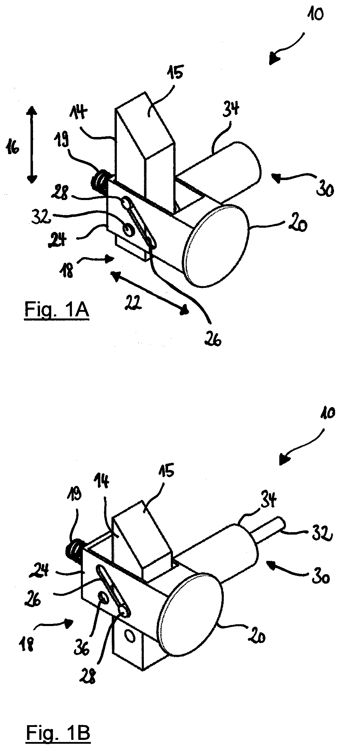

Fig. 1A und 1B zeigen rein beispielhaft ein Schloss 10 eines Fahrzeugs, welches erfindungsgemäß betrieben werden kann. In Fig. 1A ist das Schloss 10 in einem verriegelten und gesperrten Zustand, in Fig. 1B in einem entriegelten und entsperrten Zustand abgebildet.

Das Schloss 10 umfasst einen Verriegelungsmechanismus mit einem Riegel 14, der zwischen einer Verriegelungsposition (Fig. 1A) und einer Entriegelungsposition (Fig. 1B) bewegbar ist. Dabei ist eine translatorische Bewegung des Riegels 14 entlang der Richtung des Pfeils 16 vorgesehen. In der Verriegelungsposition steht der Riegel in Eingriff mit einem nicht gezeigten Gegenstück, welches durch den Riegel 14 in dem Schloss 10 verriegelnd gehalten wird. Das Gegenstück kann Teil des Schlosses 10 sein, beispielsweise ein Schließbügel oder Kloben des Schlosses 10, oder an einem schlossfremden Objekt angeordnet sein, beispielsweise an einer Batterie des Fahrzeugs.

Eine Betätigung des Riegels 14 erfolgt mittels eines einen Druckknopf 20 umfassenden Betätigungselements 18. Das Betätigungselement 18 befindet sich in der Verriegelungsposition des Riegels gemäß Fig. 1A in seinem Passivzustand, d.h. der Druckknopf 20 ist nicht eingedrückt. Bei einer Betätigung, d.h. bei einem Eindrücken des Druckknopfes 20, wird das Betätigungselement 18 entlang der Richtung des Pfeils 22 in seine Aktivposition überführt. Es handelt sich hier um eine translatorische Betätigungsbewegung. Der Druckknopf 20 ist mit einem Übertragungsabschnitt 24 verbunden. In dem Übertragungsabschnitt 24 ist eine Kulissenführung 26 angeordnet, in der an dem Riegel 14 ausgebildete Zapfen 28 geführt sind. Durch die Kulissenführung 26 und die Zapfen 28 wird die translatorische Betätigungsbewegung des Druckknopfes 20 (Pfeil 22) auf den Riegel 14 übertragen und in eine senkrecht dazu gerichtete translatorische Bewegung des Riegels 14 umgewandelt (Pfeil 16).

Das Betätigungselement 18 wirkt mit einer Feder 19 derart zusammen, dass ein Überführen des Betätigungselements 18 in seinen Aktivzustand entgegen der Rückstellkraft der Feder 19 erfolgt, wodurch die Feder 19 vorgespannt wird. Wird der Druckknopf 20 des Betätigungselements 18 in seinem Aktivzustand losgelassen, so wird er durch die Rückstellkraft der Feder 19 automatisch zurück in seinen Passivzustand überführt. Da der Riegel 14 und der Druckknopf 20 durch die Kulissenführung 26 und die Zapfen 28 bidirektional miteinander gekoppelt sind, wird der Riegel 14 bei einer Überführung des Betätigungselements 18 in den Passivzustand mitgenommen und in seine Verriegelungsposition überführt.

Das Schloss 10 weist ferner eine Sperreinrichtung 30 mit einem stiftartigen Sperrelement 32 und einem elektromotorischen Aktor 34 auf. Mittels des Aktors 34 kann das Sperrelement 32 entlang seiner Längsachse zwischen einer Sperrstellung (Fig. 1A) und einer Freigabestellung (Fig. 1B), in der das Sperrelement 32 in dem Aktor aufgenommen ist, verstellt werden. In der Sperrstellung ragt das Sperrelement 32 auf Seiten des Riegels 14 aus dem Aktor 34 heraus und steht in Eingriff mit dem in der Verriegelungsposition befindlichen Riegel 14 und einer Aussparung 36 des Übertragungsabschnitts 24. Somit ist durch das in der Sperrstellung befindliche Sperrelement 32 sowohl eine Betätigung des Druckknopfes 20 als auch eine Bewegung des Riegels 14 blockiert.

Die Sperreinrichtung 30 umfasst weiterhin eine nicht gezeigte Steuereinrichtung, die dazu ausgebildet ist, den Aktor 34 zu kontrollieren und somit das Verstellen des Sperrelements 32 zwischen der Sperrstellung und der Freigabestellung zu steuern. Die Sperreinrichtung 30 ist für einen drahtlosen Empfang von Steuerbefehlen, insbesondere Freigabe- und Sperrbefehlen, ausgebildet. Diese Steuerbefehle empfängt die Sperreinrichtung 30 von einem außerhalb des Schlosses 10 angeordneten Steuergerät, beispielsweise von seinem Bordcomputer des Fahrzeugs (nicht gezeigt).

Bei dem Schloss 10 gemäß Fig. 1A, 1B kann es sich beispielsweise um ein Rahmenschloss, Kofferschloss, Bremsscheibenschloss oder Sitzfachschloss handeln. Zudem kann das Schloss 10 zur Sicherung eines Energiespeichers, z.B. einer Batterie, dienen, d.h. ein Batterieschloss sein.

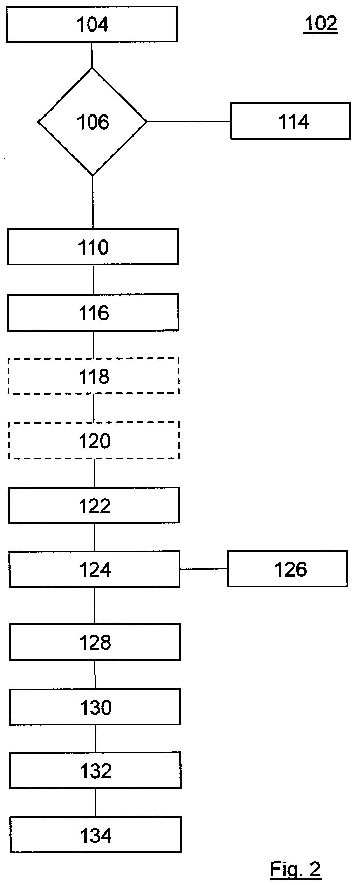

Im Folgenden wird ein Betätigungsablauf beispielhaft für ein Batterieschloss zur Sicherung eines Energiespeichers in einem Batteriefach eines Elektrofahrrads erläutert. Fig. 2 zeigt ein Ablaufdiagramm der Vorgänge, die beim Öffnen 102 des Batterieschlosses eine Rolle spielen. Ausgangspunkt ist ein Batterieschloss mit eingesetztem Energiespeicher, mit in der Verriegelungsposition befindlichem Verriegelungsmechanismus und in der Sperrstellung befindlichem Sperrelement 32 (vergleiche Fig. 1A). In der Verriegelungsposition greift der Riegel 14 in eine Aussparung des Energiespeichers ein und sichert diesen so in dem Batteriefach. Zur Ansteuerung des Batterieschlosses durch einen Nutzer ist im vorliegenden Ausführungsbeispiel ein außerhalb des Batterieschlosses an dem Elektrofahrrad angeordneter Bordcomputer mit einer Softwareanwendung und einem berührungsempfindlichen Bildschirm vorgesehen. Grundsätzlich kann auch ein Smartphone als Steuergerät dienen.

Beabsichtigt der Nutzer, den Energiespeicher aus dem Batteriefach zu entnehmen, so gibt er an dem Steuergerät einen Befehl zur Entnahme des Energiespeichers ein (Schritt 104). Während der Fahrt des Fahrzeugs soll ein Verstellen des Sperrelements 32 des Batterieschlosses 10 in die Freigabestellung unter allen Umständen verhindert werden - einerseits um die Energieversorgung beispielsweise eines Antriebsmotors des Fahrzeugs nicht zu unterbrechen, andererseits um zu vermeiden, dass eine Erschütterung während der Fahrt unbeabsichtigt eine Bewegung des Riegels 14 in die Entriegelungsposition verursacht, wodurch ein Verlust des Energiespeichers drohen würde. Das Steuergerät ermittelt daher in einem Abfrageschritt zunächst den Bewegungszustand des Elektrofahrrads (Schritt 106).

Der Bewegungszustand kann beispielsweise aus einer Drehzahl eines Antriebsmotors des Elektrofahrrads und/oder durch Abfrage eines hierfür vorgesehenen Sensors ermittelt werden. Alternativ kann eine Ermittlung des Bewegungszustands anhand von GPS-Daten vorgesehen sein. Sofern der Abfrageschritt 106 ergibt, dass das Elektrofahrrad steht, übermittelt das Steuergerät einen Freigabebefehl an die Sperreinrichtung 30 (Schritt 110). Andernfalls, sofern der Abfrageschritt 106 ergibt, dass das Elektrofahrrad sich in Bewegung befindet, sendet das Steuergerät keinen Freigabebefehl an die Sperreinrichtung 30, sondern informiert den Nutzer mittels einer Fehlermeldung auf dem Bildschirm des Bordcomputers, dass ein Öffnen des Batterieschlosses 10 nicht möglich ist (Schritt 114).

Die Sperreinrichtung 30, insbesondere eine Steuereinrichtung der Sperreinrichtung 30 empfängt den von dem Steuergerät ausgesandten Freigabebefehl (Schritt 116). Es kann vorgesehen sein, dass ein Authentifizierungsprozess stattfindet (Schritt 118), in dem sich das Steuergerät an der Steuereinrichtung der Sperreinrichtung authentifiziert, bevor diese den Freigabebefehl verarbeitet. Alternativ oder zusätzlich kann vorgesehen sein, dass der von dem Steuergerät ausgesandte Freigabebefehl durch die Steuereinrichtung entschlüsselt wird (Schritt 120).

In Schritt 122 aktiviert die Steuereinrichtung auf den Freigabebefehl hin den Aktor 34 der Sperreinrichtung 30, der das Sperrelement 32 in seine Freigabestellung bewegt (Schritt 124), während das Betätigungselement 18 und der Riegel 14 vorerst in ihrem Passivzustand bzw. ihrem Verriegelungszustand verweilen. Es kann vorgesehen sein, dass auf dem Display des Bordcomputers eine Statusmeldung ausgegeben wird (Schritt 126), die den Nutzer darüber informiert, dass das Sperrelement 32 in die Freigabestellung verstellt wurde und dass ein Entriegeln des Verriegelungsmechanismus möglich ist.

Der Nutzer drückt daraufhin den Druckknopf 20 (Schritt 128) und überführt das Betätigungselement 18 somit von seinem Passivzustand in seinen Aktivzustand (Schritt 130), wodurch der Riegel 14 aus der Verriegelungsposition in die Entriegelungsposition bewegt wird (Schritt 132). Der Riegel 14 wird dabei aus der Aussparung des Energiespeichers heraus bewegt und sichert diesen nicht mehr in dem Batteriefach. Der Nutzer kann den Energiespeicher dann aus dem Batteriefach entfernen (Schritt 134).

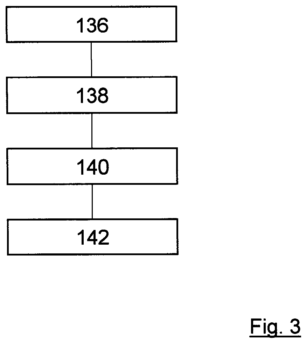

Wie in Fig. 3 gezeigt ist, lässt der Nutzer, nachdem er den Energiespeicher aus dem Batteriefach entnommen hat, den Druckknopf 20 wieder los (Schritt 136). Durch die in Fig. 1A, 1B gezeigte Feder 19 wird der Druckknopf 20 in seinen Passivzustand überführt (Schritt 138). Zugleich wird der Riegel 14 durch die Kulissenführung 26 in seine Verriegelungsposition mitgenommen (Schritt 140). Das Sperrelement 32 hingegen verweilt in Abwesenheit des Energiespeichers, d.h. in Abwesenheit des Gegenstücks, in seiner Freigabestellung. Das Batterieschloss befindet sich gewissermaßen in einem Bereitschaftszustand 142, in dem das Einsetzen des Energiespeichers jederzeit möglich ist.

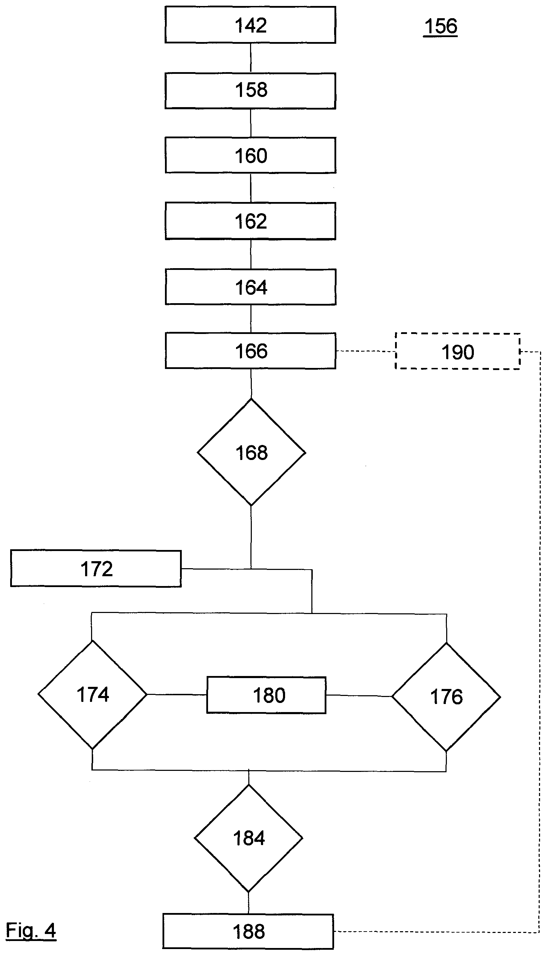

In Fig. 4 ist schematisch dargestellt, welche Vorgänge beim Schließen 156 des Schlosses eine Rolle spielen, d.h. wenn der Nutzer, beispielsweise nach einem Ladevorgang, den Energiespeicher wieder in das Batteriefach einlegt, um ihn darin zu sichern. Ausgangspunkt ist das Batterieschloss in dem Bereitschaftszustand 142, d.h. das Sperrelement 32 befindet sich in seiner Freigabestellung, das Betätigungselement 18 in seinem Passivzustand und der Verriegelungsmechanismus in seiner Verriegelungsposition.

Der Nutzer legt setzt zunächst den Energiespeicher, d.h. das Gegenstück, in den Verriegelungsmechanismus ein (Schritt 158). Während des Einsetzens gerät der Energiespeicher in Kontakt mit dem Riegel 14, insbesondere mit einer abgeschrägten Stirnseite 15 des Riegels 14, wodurch dieser durch die Einsetzbewegung des Energiespeichers sukzessive in seine Entriegelungsposition gedrückt wird (Schritt 160). Zugleich wird das Betätigungselement 18 über die Zapfen 28 und die Kulissenführung 26 mitgenommen und von dem Passivzustand in den Aktivzustand überführt (Schritt 162). Außerdem wird die Feder 19 vorgespannt.

Wenn sich der Energiespeicher seiner vollständig eingesetzten Position nähert, kann der Riegel 14 in eine dafür vorgesehene Aussparung des Energiespeichers eingreifen und wird durch den Energiespeicher somit nicht länger in die Entriegelungsposition gezwungen. Sobald dieser Zwang entfällt, wird das Betätigungselement 18 durch die vorgespannte Feder 19 in seinen Passivzustand überführt (Schritt 164) und der Riegel 14 dabei in seine Verriegelungsposition mitgenommen (Schritt 166). In der Verriegelungsposition steht der Riegel 14 nun derart mit dem Energiespeicher in Eingriff, dass dieser nicht mehr aus dem Batteriefach entnommen werden kann.

Um den Verriegelungsmechanismus in der nun erreichten Verriegelungsposition zu sperren, soll ein Verstellen des Sperrelements 32 in seine Sperrstellung erfolgen. Zunächst wird zur Vermeidung von Fehlfunktionen des Schlosses ermittelt, ob alle Voraussetzungen für das Verstellen des Sperrelements 32 in die Sperrstellung gegeben sind, nämlich ob der Energiespeicher vollständig in das Batteriefach eingesetzt ist, ob der Riegel sich in der Verriegelungsposition und das Betätigungselement sich in dem Passivzustand befinden. Zu diesem Zweck weist das Batterieschloss eine Sensoreinrichtung zur Erfassung der Position des Gegenstücks, d.h. des Energiespeichers, des Riegels 14 und/oder des Betätigungselements 18 auf. Die Sensoreinrichtung kann einen oder mehrere Sensoren aufweisen, beispielsweise Anschlagsensoren bzw. Schalter.

In dem gezeigten Ausführungsbeispiel ist vorgesehen, dass die Bestimmung der Position des Gegenstücks, d.h. des Energiespeichers, ohne einen zusätzlichen Sensor erfasst wird. Vielmehr soll die Position des Energiespeichers erfasst werden, indem das Bestehen eines elektrischen Kontakts zwischen dem Energiespeicher und der Sperreinrichtung abgefragt wird (Schritt 168). Eine erfolgreiche Herstellung des elektrischen Kontakts dient in diesem Fall als Bestätigung dafür, dass der Energiespeicher vollständig in das Batterieschloss eingesetzt wurde.

Das Einsetzen des Energiespeichers in das Batterieschloss kann bei deaktiviertem Bordcomputer und grundsätzlich ohne, dass das Batterieschloss mit einer Energieversorgung verbunden ist, erfolgen. Es kann daher vorgesehen sein, dass das erfolgreiche Herstellen des elektrischen Kontakts den Bordcomputer des Fahrzeugs aktiviert (Schritt 172) oder eine Verbindung, insbesondere eine drahtlose Verbindung, zwischen der Sperreinrichtung 30 des Batterieschlosses und dem Bordcomputer hergestellt wird.

Ist das Einsetzen des Energiespeichers in das Batterieschloss bestätigt, so wird in einem Abfrageschritt 174 die Position des Riegels 14 und in einem weiteren Abfrageschritt 176 die Position des Betätigungselements 18 erfasst. Dies kann jeweils durch Anschlagsensoren oder Schalter erfolgen, die beispielsweise in der Verriegelungsposition und in dem Aktivzustand durch den Riegel 14 und das Betätigungselement 18 betätigt werden. Sollten die Abfrageschritte 174, 176 ergeben, dass der Riegel 14 und/oder das Betätigungselement 18 sich nicht in der vorgesehenen Position befinden, so kann eine entsprechende Fehlermeldung ausgegeben werden (Schritt 180), beispielsweise auf dem Bildschirm des Bordcomputers.

Wird durch die Sensorabfrage bestätigt, dass sich der Riegel 14 in der Verriegelungsposition und das Betätigungselement 18 in dem Passivzustand befinden, so wird in einem Schritt 184 die Zeitdauer erfasst, die seit der Überführung des Gegenstücks in seine vorgesehene Position, des Riegels 14 in den Verriegelungszustands und/oder des Betätigungselements 18 in seinen Passivzustand vergangen ist.

Erst wenn jeweils eine vorbestimmte Zeitspanne verstrichen ist, wird in Schritt 188 ein Schließen des Sperrelements 32 veranlasst. Dabei kann vorgesehen sein, dass jede der beschriebenen Sensorabfragen von der Steuereinrichtung der Sperreinrichtung durchgeführt und ausgewertet wird. Ergibt die Sensorabfrage eine Abweichung von dem erwarteten Resultat, so kann die Steuereinrichtung dies über eine Drahtlosverbindung an das Steuergerät weiterleiten, welche dann eine entsprechende Fehlermeldung anzeigt.

Alternativ können die Sensorabfragen durch das Steuergerät durchgeführt und ausgewertet werden. In diesem Fall gibt das Steuergerät einen Sperrbefehl zum Verstellen des Sperrelements 32 in die Sperrstellung erst dann an die Sperreinrichtung 30 weiter, wenn alle Sensorabfragen das erwartete Ergebnis liefern. Alternativ gibt das Steuergerät eine Fehlermeldung aus.

Es kann auch vorgesehen sein, dass der Nutzer das Schließen des Sperrelements 32 nach dem Einsetzen des Energiespeichers aktiv durch eine Eingabe an dem Bordcomputer auslöst (Schritt 190). In diesem Fall kann zusätzlich vorgesehen sein, dass die Positionen einer oder mehrerer Komponenten des Batterieschlosses und/oder des Energiespeichers wie vorstehend beschrieben abgefragt werden, um Fehlfunktionen und Beschädigungen des Schlosses zu vermeiden.

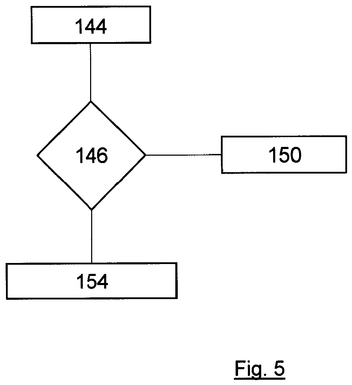

Entfernt sich der Nutzer von dem Fahrzeug, so kann vorgesehen sein, dass er den Bordcomputer von dem Elektrofahrrad abnimmt (Schritt 144), um das Elektrofahrrad zu deaktivieren und es gegen unbefugten Zugriff zu schützen (siehe Fig. 5). Alternativ kann auch ein Abschalten des Bordcomputers vorgesehen sein oder ein Trennen einer Drahtlosverbindung zwischen dem Bordcomputer und dem Batterieschloss.

Das Batterieschloss wird in diesem Fall in einen Schlafzustand versetzt. In einem Schritt 146 wird hierfür zunächst ermittelt, ob ein Gegenstück, d.h. im Fall des Batterieschlosses der Energiespeicher, mit dem Verriegelungsmechanismus in Eingriff steht, beispielsweise über Anschlags- oder Positionssensoren, eine Abfrage eines elektrischen Kontakts, der durch das Gegenstück herstellbar ist, oder eine Stellung eines durch das Gegenstück betätigbaren Schalters.

Wird die Abwesenheit eines Gegenstücks des Batterieschlosses festgestellt, so verbleibt das Sperrelement 32 in seiner Freigabestellung oder es wird, sofern es sich nicht in der Freigabestellung befindet, in diese verstellt (Schritt 150). Somit befindet sich das Batterieschloss auch in dem Schlafzustand in einem Bereitschaftszustand, in dem das Einsetzen des Energiespeichers unmittelbar möglich ist, insbesondere ohne vorherige Nutzerhandlung oder Bereitstellung einer Stromversorgung zur Betätigung des Aktors 34 der Sperreinrichtung.

Wird ein Gegenstück in dem Batterieschloss detektiert, so verbleibt das Sperrelement in seiner Sperrstellung oder es wird, sofern es sich noch nicht in der Sperrstellung befindet, in diese verstellt (Schritt 154). Somit ist der in das Batteriefach eingesetzte Energiespeicher auch in dem Schlafzustand sicher gegen unbefugte Entnahme oder Verlust gesichert. In dem Schlafzustand befinden sich unabhängig von der Stellung des Sperrelements 32 der Druckknopf in seinem Passivzustand und der Verriegelungsmechanismus entsprechend in seiner Verriegelungsposition.

### Bezugszeichenliste

- 10: Schloss
- 14: Riegel
- 15: abgeschrägte Stirnseite des Riegels 14
- 16: Bewegungsrichtung des Riegels 14
- 18: Betätigungselement
- 19: Feder
- 20: Druckknopf
- 22: Bewegungsrichtung des Betätigungselements 18
- 24: Übertragungsabschnitt
- 26: Kulissenführung
- 28: Zapfen
- 30: Sperreinrichtung
- 32: Sperrelement
- 34: Aktor
- 36: Aussparung
- 102: Öffnen des Batterieschlosses
- 104: Eingabe eines Entnahmebefehls
- 106: Ermittlung des Bewegungszustands des Fahrzeugs
- 110: Übersendung eines Freigabebefehls an die Sperreinrichtung 30
- 114: Fehlermeldung "Öffnen des Schlosses nicht möglich"
- 116: Empfangen eines Freigabebefehls durch die Sperreinrichtung 30
- 118: Authentifizierungsprozess
- 120: Entschlüsselung
- 122: Aktivierung des Aktors 34
- 124: Verstellung des Sperrelements 32 in die Freigabestellung
- 126: Statusmeldung "Entriegeln möglich"
- 128: Nutzer betätigt Druckknopf 20
- 130: Überführung des Betätigungselements 18 in den Aktivzustand
- 132: Mitnahme des Riegels 14 in die Entriegelungsposition
- 134: Entfernung des Energiespeichers durch den Nutzer
- 136: Loslassen des Druckknopfes 20
- 138: Überführung des Betätigungselements 18 in seinen Passivzustand
- 140: Mitnahme des Riegels 14 in die Verriegelungsposition
- 142: Bereitschaftszustand des Schlosses
- 144: Abnehmen des Bordcomputers von dem Fahrzeug
- 146: Ermittlung eines Gegenstücks in dem Verriegelungsmechanismus
- 150: Sperrelement 32 verbleibt in Freigabestellung oder wird in diese verstellt
- 154: Sperrelement 32 verbleibt in Sperrstellung oder wird in diese verstellt
- 156: Schließen des Batterieschlosses
- 158: Einsetzen des Energiespeichers durch den Nutzer
- 160: Drücken des Riegels 14 in die Entriegelungsposition
- 162: Überführen des Betätigungselements 18 in den Aktivzustand
- 164: Überführen des Betätigungselements 18 in den Passivzustand
- 166: Mitnahme des Riegels 14 in seine Verriegelungsposition
- 168: Abfrage elektrischer Kontakt
- 172: Aktivierung des Bordcomputers
- 174: Abfrage der Position des Riegels 14
- 176: Abfrage der Position des Betätigungselements 18
- 180: Ausgabe einer Fehlermeldung
- 184: Abfrage der Zeitdauer seit Einnehmen der Position durch Gegenstück, Riegel 14 und/oder Betätigungselement 18
- 188: Überführung des Sperrelements 32 in die Sperrstellung
- 190: Anfordern der Schließung des Sperrelements 32 durch den Nutzer

## Patentansprüche

1. Verfahren zum Betreiben eines Fahrzeugschlosses (10) mit einem Verriegelungsmechanismus, wobei ein Öffnen (102) des Schlosses (10) die folgenden Schritte umfasst:
Überführen (124) eines Sperrelements (32) einer Sperreinrichtung (30) mittels eines Aktors (34) von einer Sperrstellung in eine Freigabestellung, wobei das Sperrelement (32) in der Sperrstellung die Betätigung des Verriegelungsmechanismus blockiert, und in der Freigabestellung die Betätigung des Verriegelungsmechanismus freigibt,
manuelle Betätigung (128) eines an dem Schloss angeordneten Betätigungselements (18) und Überführen (130) des Betätigungselements (18) von einem Passivzustand in einen Aktivzustand,
wobei durch das Überführen (130) des Betätigungselements (18) von dem Passivzustand in den Aktivzustand ein Riegel (14) des Verriegelungsmechanismus von einer Verriegelungsposition in eine Entriegelungsposition überführt wird (132), wobei der Riegel (14) in der Verriegelungsposition ein Entfernen eines Gegenstücks aus dem Schloss (10) verhindert und in der Entriegelungsposition das Entfernen des Gegenstücks aus dem Schloss (10) erlaubt,
wobei nach Abschluss der Betätigung (128) des Betätigungselements (18) dieses von dem Aktivzustand in den Passivzustand überführt wird (138) und der Riegel (14) von der Entriegelungsposition in die Verriegelungsposition überführt wird (140), wohingegen das Sperrelement (32) in der Freigabestellung verweilt,
wobei ein Schließen (156) des Schlosses (10) die folgenden Schritte umfasst:
Einbringen (158) eines Gegenstücks in den Verriegelungsmechanismus, wobei das Betätigungselement (18) während des Einbringens des Gegenstücks vorübergehend in seinen Aktivzustand überführt wird (162),
Überführen (166) des Riegels (14) in die Verriegelungsposition, wobei in der Verriegelungsposition der Riegel (14) und das Gegenstück miteinander derart in Eingriff stehen, dass ein Entfernen des Gegenstücks aus dem Verriegelungsmechanismus verhindert wird,
Überführen (188) des Sperrelements (32) von der Freigabestellung in die Sperrstellung.

2. Verfahren nach Anspruch 1,
wobei das Überführen (138) des Betätigungselements (18) von dem Aktivzustand in den Passivzustand und/oder das Überführen (140) des Riegels (14) von der Entriegelungsposition in die Verriegelungsposition durch ein Rückstellelement (19) selbsttätig bewirkt wird.

3. Verfahren nach Anspruch 1 oder 2,
wobei das Überführen (124) des Sperrelements (32) von der Sperrstellung in die Freigabestellung dann erfolgt, wenn die Sperreinrichtung (30) einen Freigabebefehl empfängt (116), der durch ein außerhalb des Schlosses angeordnetes Steuergerät an die Sperreinrichtung (30) übermittelt wird, insbesondere wobei der Freigabebefehl durch eine Nutzereingabe an dem Steuergerät erzeugt wird.

4. Verfahren nach zumindest einem der vorstehenden Ansprüche,
wobei das Überführen (124) des Sperrelements (32) von der Sperrstellung in die Freigabestellung während der Fahrt des Fahrzeugs verhindert wird.

5. Verfahren nach zumindest einem der vorstehenden Ansprüche,
wobei ein Bewegungszustand des Fahrzeugs mittels eines Steuergeräts ermittelt wird (106).

6. Verfahren nach zumindest einem der vorstehenden Ansprüche,
wobei der Riegel (14) während des Einbringens des Gegenstücks vorübergehend in seine Entriegelungsposition überführt wird (160), insbesondere entgegen der Rückstellkraft eines Rückstellelements (19).

7. Verfahren nach zumindest einem der vorstehenden Ansprüche,
wobei vor dem Überführen (188) des Sperrelements (32) in die Sperrstellung eine Position des Riegels (14), des Betätigungselements (18), des Gegenstücks und/oder des Sperrelements (32) mittels einer geeigneten Sensoreinrichtung abgefragt wird (174, 176).

8. Verfahren nach zumindest einem der vorstehenden Ansprüche,
wobei das Überführen (188) des Sperrelements (32) in die Sperrstellung nur dann erfolgt, wenn eine vorbestimmte Zeitspanne seit dem Einbringen des Gegenstücks, dem Überführen des Riegels (14) in die Verriegelungsposition und/oder dem Überführen des Betätigungselements (18) in den Passivzustand verstrichen ist (186).

9. Verfahren nach zumindest einem der vorstehenden Ansprüche,
wobei das Überführen (188) des Sperrelements (32) in die Sperrstellung nur dann erfolgt, wenn eine Auswertung der Sensorabfrage ergibt, dass das Gegenstück eingebracht ist, der Riegel (14) sich in der Verriegelungsposition befindet und/oder das Betätigungselement (18) sich in dem Passivzustand befindet.

10. Verfahren nach zumindest einem der vorstehenden Ansprüche,
wobei das Überführen (188) des Sperrelements (32) in die Sperrstellung nur dann erfolgt, wenn die Sperreinrichtung (30) einen Sperrbefehl empfängt (190), der durch ein außerhalb des Schlosses (10) angeordnetes Steuergerät an die Sperreinrichtung (30) übermittelt wird.

11. Verfahren nach zumindest einem der vorstehenden Ansprüche,
wobei das Überführen (188) des Sperrelements (32) in die Sperrstellung nur dann erfolgt, wenn durch das eingebrachte Gegenstück ein Kontakt zu einer Spannungsversorgung für den Aktor des Sperrelements (32) hergestellt wird.

12. Verfahren nach zumindest einem der vorstehenden Ansprüche,
wobei das Schloss (10) in einen Schlafzustand versetzt wird,
- wenn es einen Schlafbefehl von einem außerhalb des Schlosses (10) angeordneten Steuergerät empfängt
- wenn das Steuergerät von dem Fahrzeug entfernt wird (144) oder
- wenn eine vorbestimmte Zeitspanne verstrichen ist, seit das Schloss (10) geschlossen wurde,
wobei sich in dem Schlafzustand das Sperrelement (32) in der Sperrstellung, das Betätigungselement (18) in dem Passivzustand und der Riegel (14) in dem Verriegelungszustand befinden.

## Claims

1. A method of operating a vehicle lock (10) comprising a locking mechanism, wherein an opening (102) of the lock (10) comprises the following steps:
transferring (124) a blocking element (32) of a blocking device (30) by means of an actuator (34) from a blocking position into a release position, wherein the blocking element (32) blocks the actuation of the locking mechanism in the blocking position and releases the actuation of the locking mechanism in the release position;
manually actuating (128) an actuation element (18) arranged at the lock; and transferring (130) the actuation element (18) from a passive state to an active state,
wherein a latch (14) of the locking mechanism is transferred (132) from a latched position into an unlatched position by transferring (130) the actuation element (18) from the passive state to the active state, wherein the latch (14) prevents a removal of a counter-piece from the lock (10) in the latched position and allows the removal of the counter-piece from the lock (10) in the unlatched position,
wherein, after the completion of the actuation (128) of the actuation element (18), said actuation element (18) is transferred (138) from the active state to the passive state and the latch (14) is transferred (140) from the unlatched position into the latched position, whereas the blocking element (32) remains in the release position,
wherein a closing (156) of the lock (10) comprises the following steps:
inserting (158) a counter-piece into the locking mechanism, wherein the actuation element (18) is temporarily transferred (162) to its active state during the insertion of the counter-piece;
transferring (166) the latch (14) into the latched position, wherein, in the latched position, the latch (14) and the counter-piece are in engagement with one another such that a removal of the counter-piece from the locking mechanism is prevented; and
transferring (188) the blocking element (32) from the release position into the blocking position.

2. A method according to claim 1,
wherein the transfer (138) of the actuation element (18) from the active state to the passive state and/or the transfer (140) of the latch (14) from the unlatched position into the latched position is automatically effected by a return element (19).

3. A method according to claim 1 or 2,
wherein the transfer (124) of the blocking element (32) from the blocking position into the release position takes place when the blocking device (30) receives (116) a release command which is transmitted to the blocking device (30) by a control device arranged outside the lock, in particular wherein the release command is generated by a user input at the control device.

4. A method according to at least one of the preceding claims,
wherein the transfer (124) of the blocking element (32) from the blocking position into the release position is prevented during the travel of the vehicle.

5. A method according to at least one of the preceding claims,
wherein a movement state of the vehicle is determined by means of a control device (106).

6. A method according to at least one of the preceding claims,
wherein the latch (14) is temporarily transferred (160) into its unlatched position, in particular against the return force of a return element (19), during the insertion of the counter-piece.

7. A method according to at least one of the preceding claims,
wherein a position of the latch (14), of the actuation element (18), of the counter-piece and/or of the blocking element (32) is queried (174, 176) by means of a suitable sensor device prior to the transfer (188) of the blocking element (32) into the blocking position.

8. A method according to at least one of the preceding claims,
wherein the transfer (188) of the blocking element (32) into the blocking position only takes place when a predetermined time period has elapsed (186) since the insertion of the counter-piece, the transfer of the latch (14) into the latched position and/or the transfer of the actuation element (18) to the passive state.

9. A method according to at least one of the preceding claims,
wherein the transfer (188) of the blocking element (32) into the blocking position only takes place when an evaluation of the sensor query reveals that the counter-piece is inserted, the latch (14) is in the latched position and/or the actuation element (18) is in the passive state.

10. A method according to at least one of the preceding claims,
wherein the transfer (188) of the blocking element (32) into the blocking position only takes place when the blocking device (30) receives (190) a blocking command which is transmitted to the blocking device (30) by a control device arranged outside the lock (10).

11. A method according to at least one of the preceding claims,
wherein the transfer (188) of the blocking element (32) into the blocking position only takes place when a contact to a voltage supply for the actuator of the blocking element (32) is established by the inserted counter-piece.

12. A method according to at least one of the preceding claims,
wherein the lock (10) is set into a sleep state,
- when it receives a sleep command from a control device arranged outside the lock (10),
- when the control device is removed from the vehicle (144), or
- when a predetermined time period has elapsed since the lock (10) was closed,
wherein, in the sleep state, the blocking element (32) is in the blocking position, the actuation element (18) is in the passive state and the latch (14) is in the latched state.

## Revendications

1. Procédé de fonctionnement d'une serrure de véhicule (10) comportant un mécanisme de verrouillage, dans lequel une ouverture (102) de la serrure (10) comprend les étapes suivantes consistant à :
transférer (124) un élément de blocage (32) d'un dispositif de blocage (30) au moyen d'un actionneur (34) d'une position de blocage à une position de déblocage, l'élément de blocage (32) bloquant l'actionnement du mécanisme de verrouillage dans la position de blocage et débloquant l'actionnement du mécanisme de verrouillage dans la position de déblocage,
actionner manuellement (128) un élément d'actionnement (18) disposé sur la serrure, et transférer (130) l'élément d'actionnement (18) d'un état passif à un état actif,
dans lequel, suite au transfert (130) de l'élément d'actionnement (18) de l'état passif à l'état actif, un verrou (14) du mécanisme de verrouillage est transféré (132) d'une position de verrouillage à une position de déverrouillage, le verrou (14) empêchant, dans la position de verrouillage, le retrait d'une contre-pièce de la serrure (10) et permettant, dans la position de déverrouillage, le retrait de la contre-pièce de la serrure (10),
dans lequel, à la fin de l'actionnement (128) de l'élément d'actionnement (18), celui-ci est transféré (138) de l'état actif à l'état passif, et le verrou (14) est transféré (140) de la position de déverrouillage à la position de verrouillage, tandis que l'élément de blocage (32) reste dans la position de déblocage,
dans lequel une fermeture (156) de la serrure (10) comprend les étapes suivantes consistant à :
insérer (158) une contre-pièce dans le mécanisme de verrouillage, l'élément d'actionnement (18) étant transféré temporairement dans son état actif pendant l'insertion de la contre-pièce,
transférer (166) le verrou (14) à la position de verrouillage, le verrou (14) et la contre-pièce étant en prise l'un avec l'autre, dans la position de verrouillage, de manière à empêcher le retrait de la contre-pièce du mécanisme de verrouillage,
transférer (188) l'élément de blocage (32) de la position de déblocage à la position de blocage.

2. Procédé selon la revendication 1,
dans lequel le transfert (138) de l'élément d'actionnement (18) de l'état actif à l'état passif et/ou le transfert (140) du verrou (14) de la position de déverrouillage à la position de verrouillage est provoqué automatiquement par un élément de rappel (19).

3. Procédé selon la revendication 1 ou 2,
dans lequel le transfert (124) de l'élément de blocage (32) de la position de blocage à la position de déblocage a lieu si le dispositif de blocage (30) reçoit (116) un ordre de déblocage transmis au dispositif de blocage (30) par un appareil de commande disposé à l'extérieur de la serrure, en particulier, l'ordre de déblocage est généré par l'entrée d'un utilisateur sur l'appareil de commande.

4. Procédé selon l'une au moins des revendications précédentes,
dans lequel le transfert (124) de l'élément de blocage (32) de la position de blocage à la position de déblocage est empêché pendant le déplacement du véhicule.

5. Procédé selon l'une au moins des revendications précédentes,
dans lequel un état de mouvement du véhicule est déterminé (106) au moyen d'un appareil de commande.

6. Procédé selon l'une au moins des revendications précédentes,
dans lequel, pendant l'insertion de la contre-pièce, le verrou (14) est transféré (160) temporairement à sa position de déverrouillage, en particulier à l'encontre de la force de rappel d'un élément de rappel (19).

7. Procédé selon l'une au moins des revendications précédentes,
dans lequel, avant le transfert (188) de l'élément de blocage (32) à la position de blocage, une position du verrou (14), de l'élément d'actionnement (18), de la contre-pièce et/ou de l'élément de blocage (32) est interrogée (174, 176) au moyen d'un dispositif de détection approprié.

8. Procédé selon l'une au moins des revendications précédentes,
dans lequel le transfert (188) de l'élément de blocage (32) à la position de blocage n'a lieu que si un laps de temps prédéterminé s'est écoulé (186) depuis l'insertion de la contre-pièce, depuis le transfert du verrou (14) à la position de verrouillage et/ou depuis le transfert de l'élément d'actionnement (18) à l'état passif.

9. Procédé selon l'une au moins des revendications précédentes,
dans lequel le transfert (188) de l'élément de blocage (32) à la position de blocage n'a lieu que si une évaluation de l'interrogation du dispositif de détection montre que la contre-pièce est insérée, que le verrou (14) se trouve dans la position de verrouillage et/ou que l'élément d'actionnement (18) se trouve dans l'état passif.

10. Procédé selon l'une au moins des revendications précédentes,
dans lequel le transfert (188) de l'élément de blocage (32) à la position de blocage n'a lieu que si le dispositif de blocage (30) reçoit (190) un ordre de blocage transmis au dispositif de blocage (30) par un appareil de commande disposé à l'extérieur de la serrure (10).

11. Procédé selon l'une au moins des revendications précédentes,
dans lequel le transfert (188) de l'élément de blocage (32) à la position de blocage n'a lieu que si un contact avec une alimentation en tension pour l'actionneur de l'élément de blocage (32) est établi par la contre-pièce insérée.

12. Procédé selon l'une au moins des revendications précédentes,
dans lequel la serrure (10) est mis dans un état de sommeil,
- si elle reçoit un ordre de mise en sommeil d'un appareil de commande disposé à l'extérieur de la serrure (10),
- si l'appareil de commande est retiré du véhicule (144), ou
- si un laps de temps prédéterminé s'est écoulé depuis que la serrure (10) a été fermée,
dans l'état de sommeil, l'élément de blocage (32) se trouve dans la position de blocage, l'élément d'actionnement (18) se trouve dans l'état passif, et le verrou (14) se trouve dans l'état de verrouillage.
